# EUROPÄISCHE PATENTANMELDUNG

(11) **EP 1 956 212 A1**
(43) Veröffentlichungstag der Anmeldung: **13.08.2008**
(21) Anmeldenummer: 08101315.3
(22) Anmeldetag: 06.02.2008
(51) Int. Cl.: F02B 29/04

(54) **Anordnung eines Ladeluftkühlers in einem Ansaugsystem einer Brennkraftmaschine**

(30) Priorität: 09.02.2007 DE 202007002169 U
(71) Anmelder: MANN+HUMMEL GmbH, 71638 Ludwigsburg (DE)
(72) Erfinder: Hummel, Karl-Ernst, 74321 Bietigheim-Bissingen (DE); Huurdeman, Dr. Bernhard, 71691 Freiberg a.N. (DE)

(57) **Zusammenfassung**

Die Anordnung eines Ladeluftkühlers (10) in einem Ansaugsystem (2) einer Brennkraftmaschine (1) umfasst einen Ladeluftkühler (10), der einerseits von der zugeführten Verbrennungsluft und andererseits von einem flüssigen Kühlmittel beaufschlagt wird. Es ist ein Kühlmittel/Luft-Kühler (18) vorgesehen, in dem das flüssige Kühlmittel von einem Luftstrom (KL) gekühlt wird. Der Ladeluftkühler (10) ist bezüglich seiner von der Ladeluft baufschlagten Stirnfläche (11) eines Wärmetauscherblocks (12) geneigt in einer Rohrleitung (9) für die Ladeluft eingebaut. Die Stirnfläche (11) des Ladeluftkühlers (10) ist bezogen auf den Querschnitt (Q) der Rohrleitung (9) in einem Winkel (α) von > 45° angeordnet.

## Beschreibung

### Technisches Gebiet

Die Erfindung betrifft die Anordnung eines Ladeluftkühlers in einem Ansaugsystem einer Brennkraftmaschine mit einem Lader für die Verbrennungsluft der im Oberbegriff des Anspruchs 1 angegebenen Gattung.

### Stand der Technik

Bei aufgeladenen Verbrennungsmotoren ist häufig zur Kühlung der verdichteten Luft ein Ladeluftkühler erforderlich. Bei der direkten Ladeluftkühlung wird die Ladeluft über einen Ladeluft/Luft-Wärmetauscher vom Fahrtwind gekühlt. Bei der indirekten Ladeluftkühlung wird die Ladeluft über einen Ladeluft/Kühlmittel-Wärmetauscher gekühlt. Das Kühlmittel selbst wird über einen Kühlmittel/Luft-Wärmetauscher vom Fahrtwind gekühlt, gegebenenfalls mit Unterstützung eines Lüfters. Solche Kühlmittel/Luft-Wärmetauscher sind in unterschiedlicher Ausgestaltung bekannt.

In der NL-C-1027948 ist ein Ladeluftkühler beschrieben, der einerseits von der den Zylindern des Verbrennungsmotors zugeführten Luft und andererseits von einem Kühlmittel beaufschlagt wird. In die Ladeluftleitung ist dabei ein Gehäuse eingesetzt, in dem ein oder zwei Wärmetauscher stehend angeordnet sind, wobei im Falle von zwei Wärmetauschern diese bezüglich ihrer Stirnseiten V-förmig zueinander angeordnet sind. Diese Ausführungen benötigen einen erheblichen Bauraum, da die Gehäuse und die Wärmetauscher bezogen auf den Querschnitt der Ladeluftleitung wesentlich größer gestaltet sind.

Die DE 103 59 806 A1 offenbart einen Wärmeübertrager, der als Abgaswärmeübertrager oder Ladeluftkühler verwendbar ist. Als Kühlmedium zur Kühlung der Ladeluft ist eine Kühlflüssigkeit vorgesehen. Der Wärmetauscher ist aus einem Stapel flacher Wärmeübertragerrohre aufgebaut, wobei die jeweiligen Enden der Rohre in Sammelkästen aufgenommen sind, an denen die Ladeluftleitung angeschlossen ist. Die Wärmeübertragerrohre werden in ihrer Längsrichtung von der Ladeluft durchströmt, während zwischen den Flachrohren Strömungskanäle ausgebildet sind, die von der Kühlflüssigkeit durchströmt werden. Eine solche Bauweise des Wärmeübertragers trägt den enormen Temperaturwechseln insbesondere bei Abgaswärmeübertragern Rechnung, sie bedingt aber auch einen großen Herstellungsaufwand.

Der Erfindung liegt die Aufgabe zugrunde, eine Anordnung eines Ladeluftkühlers der eingangs genannten Gattung derart zu schaffen, dass diese mit einfachen Mitteln bei kleiner Bauweise herstellbar ist.

Diese Aufgabe wird durch eine Anordnung eines Ladeluftkühlers mit den Merkmalen des Anspruchs 1 gelöst.

### Offenbarung der Erfindung

Der geneigte Einbau eines Ladeluftkühlers nach den Merkmalen des Anspruchs 1 bietet den Vorteil, dass der Ladeluftkühler in einer Rohrleitung des Ansaugsystems eingebaut werden kann, ohne dass dazu ein zusätzliches Gehäuse für den Ladeluftkühler erforderlich wird. Der Neigungswinkel von > 45° bezogen auf die Linie des Querschnitts durch die Rohrleitung führt zu einer lediglich geringen resultierenden Höhe des Wärmtauscherblocks bei gleichzeitig großer Stirnfläche für die Beaufschlagung mit Ladeluft.

Gemäß einer bevorzugten Ausgestaltung der Erfindung ist der Ladeluftkühler mit mindestens einem Sammelkasten für das Kühlmittel versehen, wobei der Sammelkasten beziehungsweise die Sammelkästen außerhalb der Rohrleitung angeordnet sind. Auf diese Weise befindet sich lediglich der Wärmetauscherblock in dem vom Ladeluftstrom beaufschlagten Querschnitt, so dass die Sammelkästen keinen Strömungswiderstand für die Ladeluft darstellen.

Vorzugsweise weist die Rohrleitung zu- und abströmseitig des Ladeluftkühlers Abschnitte auf, deren Querschnitt im Wesentlichen der Fläche entspricht, die sich aus der durch den Winkel, um den der Ladeluftkühler geneigt ist, erhaltenen Höhe des Ladeluftkühlers und dessen orthogonal zur Luftströmungsrichtung gegebener Breite des Wärmetauscherblocks ergibt. Auf diese Weise bleibt der für die Ladeluft zur Verfügung stehende Querschnitt in der gesamten Rohrleitung im Wesentlichen konstant.

Es kann auch zweckmäßig sein, den Ladeluftkühler mit zwei Sammelkästen zu versehen, die jeweils einen dem Wärmetauscherblock zugewandten Boden umfassen und dieser Boden an die Kontur der Rohrleitung angepasst ist. Auf diese Weise sind spezielle Ausformungen der Abschnitte der Rohrleitung zum luftdichten Anschluss an den Rand des Wärmetauscherblocks nicht erforderlich. Zweckmäßigerweise ist die Rohrleitung bezüglich der Abschnitte vor und hinter dem Ladeluftkühler mindestens zweiteilig ausgebildet und der Ladeluftkühler ist zwischen diesen Abschnitten derart eingebaut, dass die Ränder des Wärmetauscherblocks gegen die Rohrleitung abgedichtet sind. Alternativ dazu ist es jedoch auch möglich, dass die Rohrleitung bezüglich der Abschnitte einstückig ist und eine Öffnung aufweist, durch die der Ladeluftkühler in die Rohrleitung einsteckbar ist.

Bezüglich der Ausgestaltung des Ladeluftkühlers ist es möglich, dass der Ladeluftkühler an einem gemeinsamen Ende des Wärmetauscherblocks beide Sammelkästen für den Zulauf und den Rücklauf des Kühlmittels aufweist und am anderen Ende Mittel zur Umlenkung der Kühlflüssigkeit vorgesehen sind. Aus unterschiedlichen Gründen kann es zweckmäßig sein, den Ladeluftkühler aus mehreren Wärmetauscherblöcken zu bilden, die eine geringere Tiefe aufweisen als die Gesamtanordnung, wobei die Wärmetauscherblöcke über die endseitigen Sammelkästen verbunden sind. Die Wärmetauscherblöcke sind in einem solchen Fall in Durchströmungsrichtung der Ladeluft gesehen unmittelbar aneinander liegend angeordnet.

Für einen einfachen Aufbau des Ladeluftkühlers wird vorgeschlagen, dass der Ladeluftkühler ein Rohr/Rippen-Wärmetauscher ist, wobei die Enden der Rohre in den Sammelkästen dichtend befestigt sind und die Rippen mit der Außenseite der Rohre wärmeleitend verbunden sind. Die Rohre können je nach Konstruktionsart des Wärmetauschers unterschiedliche Querschnitte besitzen, beispielsweise als Flachrohr, Rundrohr oder Ovalrohr gestaltet sein. Bezüglich der Sammelkästen ist es möglich, den Rohrboden aus Metall herzustellen und den Sammelkastendeckel ebenfalls aus Metall oder aus Kunststoff zu gestalten.

### Kurze Beschreibung der Zeichnungen

Ausführungsbeispiele der Erfindung sind nachfolgend anhand der Zeichnung näher erläutert. In der Zeichnung zeigt:

Fig. 1 in schematischer Darstellung eine Brennkraftmaschine mit Turbolader und einer Anordnung eines Ladeluftkühlers in einem Ansaugsystem;
Fig. 2 eine Rohrleitung des Ansaugsystems mit einer Ausführungsvariante des Ladeluftkühlers,
Fig. 3 eine Ausführungsvariante zu Fig. 2,
Fig. 4 eine weitere Ausführungsvariante zu Fig. 2.

### Ausführungsform(en) der Erfindung

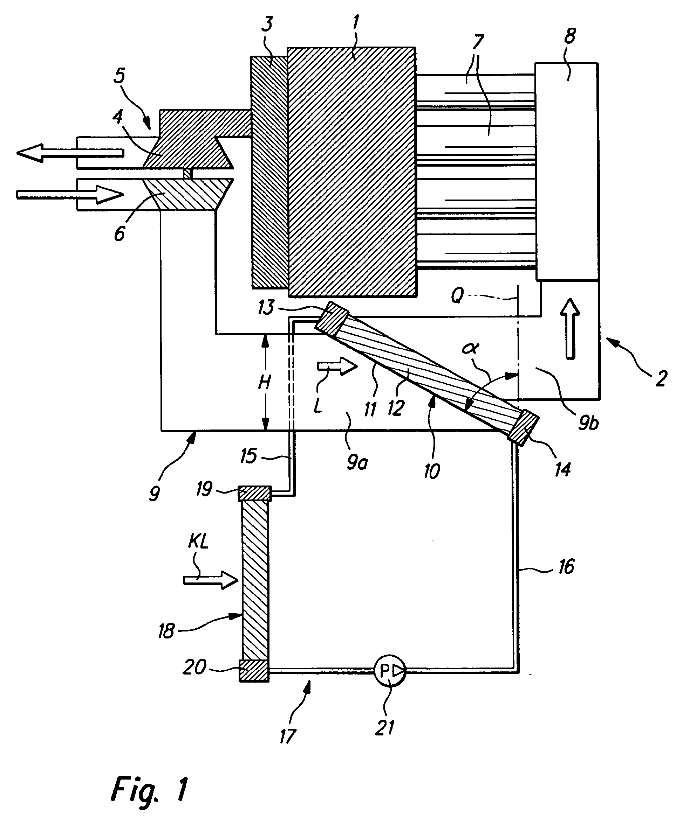

Die Fig. 1 zeigt eine Brennkraftmaschine 1 mit einem Ansaugsystem 2 und einem Abgaskrümmer 3. Mit dem Abgaskrümmer 3 ist eine Turbine 4 eines Abgasturboladers 5 verbunden, während an einen Verdichter 6 das Ansaugsystem 2 angeschlossen ist. Das Ansaugsystem 2 umfasst mehrere Saugrohre 7, die von einer Saugleitung 8 zu der Brennkraftmaschine 1 führen. Zwischen dem Verdichter 6 und der Saugleitung 8 umfasst das Ansaugsystem 2 eine Rohrleitung 9, die aus Abschnitten 9a und 9b besteht. In der Rohrleitung 9 ist zwischen den Abschnitten 9a und 9b ein Ladeluftkühler 10 angeordnet, der bezogen auf einen Querschnitt Q der Rohrleitung 9 geneigt in der Rohrleitung 9 verläuft, wobei eine Stirnfläche 11 des Ladeluftkühlers 10 zu dem Querschnitt Q einen Winkel α > 45° aufweist. Im Ausführungsbeispiel beträgt der Winkel α circa 60°.

Der Ladeluftkühler 10 ist derart geneigt in der Rohrleitung 9 angeordnet, dass die Oberkante der Stirnseite 11 eines Wärmetauscherblocks 12 an den oberen Rand des Rohrleitungsabschnitts 9a und die Unterkante der Stirnseite 11 an den unteren Rand grenzt. Damit nimmt der Wärmetauscherblock 12 des Ladeluftkühlers 10 eine Höhe H ein, die dem entsprechenden Innenmaß der Rohrleitung 9 entspricht. An gegenüberliegenden Enden des Wärmetauscherblocks 12 ist der Ladeluftkühler 10 mit Sammelkästen 13, 14 versehen, in welche die Enden von Rohren des Wärmetauscherblocks 12 münden. An die Sammelkästen 13, 14 sind Leitungen 15, 16 eines Kühlmittelkreises 17 angeschlossen, in dem ein flüssiges Kühlmittel strömt. Die Leitungen 15, 16 sind an einen Kühlmittel/Luft-Kühler 18 bzw. dessen Sammelkästen 19, 20 angeschlossen. Zur Zirkulation des Kühlmittels dient eine Pumpe 21, die im gezeigten Ausführungsbeispiel in der Leitung 16 angeordnet ist.

Im Betrieb der Brennkraftmaschine 1 treibt die Turbine 4 den Verdichter 6 an, der die Ladeluft erzeugt, und wobei die Ladeluft gemäß Pfeil L durch die Rohrleitung 9 strömt. Die Rohrleitung 9 weist die Höhe H auf und erstreckt sich über eine Breite orthogonal zur Luftströmungsrichtung L. Wegen der geneigten Position des Ladeluftkühlers 10 nimmt dieser keinen größeren Bauraum ein und benötigt auch kein separates Gehäuse. Dennoch bietet der Ladeluftkühler eine große Stirnfläche 11 für eine effektive Kühlung der Ladeluft.

Der Ladeluftkühler kann in einfacher Weise als Rohr/Rippen-Wärmetauscher gestaltet sein, wobei die Rippen außen an den Rohren in guter wärmeleitender Verbindung befestigt sind. Die der Ladeluft entzogene Wärme wird von dem durch die Rohre strömenden Kühlmittel aufgenommen und das Kühlmittel durch die Leitung 15 dem Kühlmittel/Luft-Kühler 18 zugeführt. Der Kühlmittel/Luft-Kühler 18 wird einerseits vom Kühlmittel durchströmt und andererseits von einem Kühlluftstrom KL beispielsweise dem Fahrtwind beaufschlagt. Zur Erzeugung eines stets ausreichenden Kühlluftstroms kann dem Kühlmittel/Luft-Kühler 18 ein Lüfter zugeordnet sein. Die Pumpe 21 saugt das im Kühler 18 gekühlte Kühlmittel an und fördert dieses zu dem Sammelkasten 14 des Ladeluftkühlers 10.

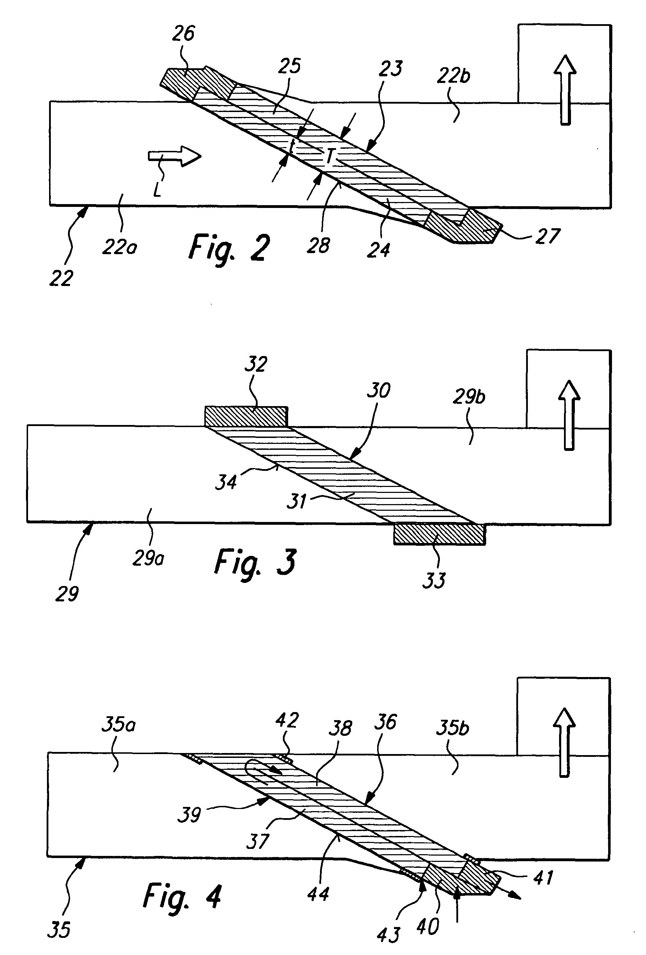

In Fig. 2 ist eine Rohrleitung 22 des Ansaugsystems dargestellt, die Rohrleitungsabschnitte 22a, 22b umfasst, zwischen denen ein Ladeluftkühler 23 angeordnet ist. Der Ladeluftkühler 23 umfasst zwei Wärmetauscherblöcke 24, 25, die in Durchströmungsrichtung der Ladeluft unmittelbar aneinander liegen. Die Rohrenden der Wärmetauscherrohre sind in Sammelkästen 26, 27 aufgenommen, wobei die jeweiligen Rohrböden versetzt zueinander angeordnet sind, um die Gesamtanordnung aus beiden Wärmetauscherblöcken 24, 25 besser an die Querschnittsform der Rohrleitung 22 anzupassen. Die einzelnen Wärmetauscherblöcke besitzen eine Tiefe t, woraus sich eine Tiefe T für die Gesamtanordnung ergibt. An die Sammelkästen 20, 27 werden Leitungen für das flüssige Kühlmittel angeschlossen, wie dies in Fig. 1 dargestellt ist. Mit dem Bezugszeichen 28 ist die von der Ladeluft beaufschlagte Stirnfläche des Wärmetauscherblocks 24 bezeichnet. Auch aus Fig. 2 ist ersichtlich, dass die Sammelkästen 26, 27 außerhalb des die Ladeluft führenden Innenquerschnitts der Rohrleitung 22 angeordnet sind. Je nach benötigter Leistung des Ladeluftkühlers können auch mehr als zwei Wärmetauscherblöcke zusammengebaut werden.

In Fig. 3 ist eine Ausführungsvariante einer Rohrleitung 29 aus Abschnitten 29a, 29b mit einem Ladeluftkühler 30, der einen Wärmetauscherblock 31 und Sammelkästen 32, 33 für das flüssige Kühlmittel umfasst, dargestellt. Der Wärmetauscherblock 31 weist in der Darstellung in Fig. 3 die Form eines Parallelogramms auf, wobei jeweils die obere und untere Seite des Wärmetauscherblocks 31 eine Höhe H des Ladeluftkühlers 30 definieren, die der Höhe H der Rohrleitung 29 entspricht. Die an der oberen und unteren Seite des Wärmetauscherblocks 31 angeordneten Sammelkästen 32 und 33 sind an die Kontur der Rohrleitungsabschnitte 29a, 29b angepasst und befinden sich außerhalb von diesen. Eine solche Ausgestaltung des Ladeluftkühlers 30 ermöglicht, dass die Rohrleitung 29 einen völlig geraden Verlauf hat und keine Anpassungen an die Form bzw. Lage des Wärmetauscherblocks notwendig sind. Mit dem Bezugszeichen 34 ist die Stirnfläche des Wärmetauscherblocks 31 bezeichnet. An die Sammelkästen 32, 33 werden Leitungen für das flüssige Kühlmittel angeschlossen, wie dies aus Fig. 1 ersichtlich ist.

Die Fig. 4 zeigt eine Ausführungsvariante einer Rohrleitung 35 aus Abschnitten 35a, 35b mit einem Ladeluftkühler 36, der zwei Abschnitte 37, 38 eines Wärmetauscherblocks 39 aufweist. An einem Ende des Wärmetauscherblocks 39 sind zwei Sammelkästen 40, 41 vorgesehen, in denen die Enden der Wärmetauscherrohre aufgenommen sind. Am anderen Ende des Wärmetauscherblocks 39 ist eine innere Umlenkung für das flüssige Kühlmittel vorgesehen, d. h. das Kühlmittel strömt zunächst durch den Abschnitt 37 und wird am anderen Ende in den Abschnitt 38 umgelenkt, um durch diesen zum Sammelkasten 41 zu strömen. Ein solcher Ladeluftkühler 36 kann auf einfache Weise dadurch in die Rohrleitung 35 eingebracht werden, dass der Wärmetauscherblock 39 durch eine Öffnung 43 in der Rohrleitung 35 in diese eingeführt wird. Zum sicheren Halt des freien Endes des Wärmetauscherblocks 39 ist an der gegenüberliegenden Wand der Rohrleitung 35 eine Halterung 42 vorgesehen, in die das Ende des Wärmetauscherblocks 39 gesteckt wird. Der Ladeluftkühler 36 weist eine Stirnfläche 44 auf, und die Sammelkästen 40, 41 werden an Leitungen für die Kühlflüssigkeit angeschlossen, wie dies in Fig. 1 angegeben ist.

## Patentansprüche

1. Anordnung eines Ladeluftkühlers (10, 23, 30, 36) in einem Ansaugsystem (2) einer Brennkraftmaschine (1) mit einem Lader (5) für die Verbrennungsluft, wobei der Ladeluftkühler (10, 23, 30, 36) einerseits von der zugeführten Verbrennungsluft und andererseits von einem flüssigen Kühlmittel beaufschlagt wird, und ein Kühlmittel/Luft-Kühler (18) vorgesehen ist, in dem das flüssige Kühlmittel von einem Luftstrom (KL), beispielsweise dem Fahrtwind, gekühlt wird **dadurch gekennzeichnet, dass** der Ladeluftkühler (10, 23, 30, 36) bezüglich seiner von der Ladeluft beaufschlagten Stirnfläche (11, 28, 34, 44) eines Wärmetauscherblocks (12, 24, 25, 31,39) geneigt in einer Rohrleitung (8, 22, 29, 35) für die Ladeluft eingebaut ist, wobei die Stirnfläche (11, 28, 34, 44) des Ladeluftkühlers (10, 23, 30, 36) bezogen auf den Querschnitt (Q) der Rohrleitung (9, 22, 29, 35) in einem Winkel (α) von > 45° angeordnet ist.

2. Anordnung nach Anspruch 1, **dadurch gekennzeichnet, dass** der Ladeluftkühler (10,23, 30, 36) mindestens einen, vorzugsweise zwei Sammelkästen (19, 20, 26, 27, 32, 33, 40, 41) für das Kühlmittel aufweist und die Sammelkästen (19, 20, 26, 27, 32, 33, 40, 41) außerhalb der Rohrleitung (9, 22, 29, 35) angeordnet sind.

3. Anordnung nach Anspruch 1 oder 2, **dadurch gekennzeichnet, dass** die Rohrleitung (9, 22, 29, 35) zu- und abströmseitig des Ladeluftkühlers (10, 23, 30, 36) Abschnitte (9a, 9b, 22a, 22b, 29a, 29b, 35a, 35b) aufweist, deren Querschnitt (Q) im Wesentlichen der Fläche entspricht, die sich aus der durch den Winkel (α) erhaltenen Höhe (H) des Ladeluftkühlers (10, 23, 30, 36) und dessen orthogonal zur Luftströmungsrichtung (L) gegebener Breite des Wärmetauscherblocks ergibt.

4. Anordnung nach einem der Ansprüche 2 oder 3, **dadurch gekennzeichnet, dass** der Ladeluftkühler (30) zwei Sammelkästen (32, 33) aufweist, die jeweils einen dem Wärmetauscherblock (31) zugewandten Rohrboden umfassen und dieser Rohrboden an die Kontur der Rohrleitung (29) angepasst ist.

5. Anordnung nach einem der Ansprüche 1 bis 4, **dadurch gekennzeichnet, dass** die Rohrleitung (9, 22, 29) bezüglich der Abschnitte (9a, 9b, 22a, 22b, 29a, 29b) mindestens zweiteilig ausgebildet und der Ladeluftkühler (10, 23, 30) zwischen diesen Abschnitten (9a, 9b, 22a, 22b, 29a, 29b) derart eingebaut ist, dass die Ränder des Wärmetauscherblocks (12, 24, 25, 31) gegen die Rohrleitung (9, 22, 29) abgedichtet sind.

6. Anordnung nach einem der Ansprüche 1 bis 4, **dadurch gekennzeichnet, dass** die Rohrleitung (35) bezüglich der Abschnitte (35a, 35b) einstückig ist und eine Öffnung (43) aufweist, durch die der Ladeluftkühler (36) in die Rohrleitung (35) einsteckbar ist.

7. Anordnung nach Anspruch 6, **dadurch gekennzeichnet, dass** der Ladeluftkühler (36) an einem gemeinsamen Ende des Wärmetauscherblocks (39) beide Sammelkästen (40, 41) für den Zulauf und den Rücklauf der Kühlflüssigkeit aufweist und am anderen Ende Mittel zur Umlenkung der Kühlflüssigkeit vorgesehen sind.

8. Anordnung nach einem der Ansprüche 2 bis 5, **dadurch gekennzeichnet, dass** der Ladeluftkühler (23) zwei Wärmetauscherblöcke (24, 25) mit einer Tiefe (t) umfasst, wobei die Wärmetauscherblöcke (24, 25) in Durchströmungsrichtung der Ladeluft unmittelbar aneinander liegen und die Wärmetauscherblöcke (24, 25) über die endseitigen Sammelkästen (26, 27) verbunden sind.

9. Anordnung nach einem der Ansprüche 2 bis 8, **dadurch gekennzeichnet, dass** der Ladeluftkühler (10, 23, 30, 36) ein Rohr/Rippen-Wärmetauscher ist, wobei die Enden der Rohre in den Sammelkästen dichtend befestigt sind, und die Rippen mit der Außenseite der Rohre wärmeleitend verbunden sind.

10. Anordnung nach einem der Ansprüche 1 bis 9, **dadurch gekennzeichnet, dass** der Winkel (α) der Stirnfläche (11, 28, 34, 44) zum Querschnitt (Q) circa 60° beträgt.
